# FASCICULE DE BREVET EUROPEEN

(11) **EP 4 045 407 B1**
(45) Date de publication et mention de la délivrance du brevet: **17.12.2025**
(21) Numéro de dépôt: 20801330.0
(22) Date de dépôt: 13.10.2020
(51) Int. Cl.: B64D 27/14, B64D 27/20, B64C 7/02, B64D 29/04

(54) **AVION À NACELLE DÉPORTÉE AFFLEURANT LE SILLAGE DE L'AILE**
FLUGZEUG MIT EINER MIT DEM NACHLAUF DES FLÜGELS AUSGERICHTETEN VERSETZEN GONDEL
AIRCRAFT WITH AN OFFSET NACELLE ALIGNED WITH THE WAKE OF THE WING

(30) Priorité: 15.10.2019 FR 1911467
(43) Date de publication de la demande: 24.08.2022
(73) Titulaire: Safran Nacelles, 76700 Gonfreville l'Orcher (FR); SAFRAN AIRCRAFT ENGINES, 75015 Paris (FR); Institut Supérieur de l'Aéronautique et de l'Espace, 31055 Toulouse Cedex 4 (FR)
(72) Inventeur: GONIDEC, Patrick, 77550 MOISSY CRAMAYEL (FR); AGUIRRE, Miguel Angel, 77550 MOISSY CRAMAYEL (FR); TANTOT, Nicolas, 77550 MOISSY CRAMAYEL (FR); BEUTIN, Bruno, 77550 MOISSY CRAMAYEL (FR); ROBIC, Bernard, 77550 MOISSY CRAMAYEL (FR); DUPLAA, Sébastien, 31450 POMPERTUZAT (FR)
(74) Mandataire: Germain Maureau
(86) Numéro de dépôt international: PCT/FR2020/051805
(87) Numéro de publication internationale: WO 2021/074516

(56) Documents cités:
- CA-A- 805 875
- CN-A- 102 037 232
- GB-A- 1 157 478
- US-A- 4 500 055
- US-A1- 2005 103 929
- US-A1- 2012 043 430
- US-A1- 2017 137 137
- US-A1- 2018 281 978
- FUJINO M ET AL: "WAVE-DRAG CHARACTERISTICS OF AN OVER-THE-WING NACELLE BUSINESS-JET CONFIGURATION", JOURNAL OF AIRCRAFT, AIAA - AMERICAN INSTITUTE OF AERONAUTICS AND ASTRONAUTICS, INC, US, vol. 40, no. 6, 1 November 2003 (2003-11-01), pages 1177 - 1184, XP001185536, ISSN: 0021-8669
- ANONYMOUS: "GE Aviation in Co-Op on VTOL Demonstration | American Machinist", 19 September 2018 (2018-09-19), XP055709113, Retrieved from the Internet <URL:https://www.americanmachinist.com/news/article/21902861/ge-aviation-in-coop-on-vtol-demonstration> [retrieved on 20200626]
- SAM DAVIS: "Boeing to Acquire Aurora Flight Sciences, an Autonomous Flight Technology Pioneer | Power Electronics", 26 October 2017 (2017-10-26), XP055709027, Retrieved from the Internet <URL:https://www.powerelectronics.com/news/article/21864044/boeing-to-acquire-aurora-flight-sciences-an-autonomous-flight-technology-pioneer> [retrieved on 20200626]
- ANONYMOUS: "Lilium's 36-Engine Air Taxi Completes First Test Flight // TransportUP", 18 May 2019 (2019-05-18), XP055709123, Retrieved from the Internet <URL:https://transportup.com/headlines-breaking-news/vehicles-manufactures/liliums-36-engine-air-taxi-completes-first-test-flight/> [retrieved on 20200626]

## Description

La présente invention se rapporte au domaine général des avions propulsés par des turboréacteurs à double flux.

Les avions sont généralement équipés de turboréacteurs montés dans des nacelles elles-mêmes portées par les ailes de l'avion ou intégrées en position arrière d'une aile ou bien du fuselage de l'avion et peuvent y être fixés par l'intermédiaire de pylônes.

Un positionnement des turboréacteurs sous les ailes de l'avion présente l'inconvénient de limiter le dimensionnement des nacelles du fait de l'exigence de garde au sol.

Par ailleurs, en vol, l'effet de frottement visqueux de l'écoulement d'air sur les ailes de l'avion se manifeste par l'apparition d'une couche limite autour de ces dernières. Lorsqu'une nacelle est intégrée structurellement à l'aile d'un avion, on comprendra que la nacelle et l'aile sont alors en dépendance mécanique et aérodynamique l'une de l'autre. En raison de cette dépendance, une partie de la nacelle est comprise dans la couche limite de cette aile augmentant alors la traînée aérodynamique de l'avion et générant d'importantes distorsions au niveau de l'entrée d'air de la nacelle et des vibrations au niveau des arbres des moteurs.

Les constructeurs cherchent en conséquence à réduire ces distorsions ainsi que la traînée aérodynamique des avions. L'une des façons qui est envisagée pour y parvenir est d'encastrer au moins partiellement les moteurs à l'intérieur du fuselage de l'avion pour supprimer les pylônes et les carénages des moteurs, ce qui diminue la masse de l'ensemble propulsif et réduit la traînée aérodynamique des ailes de l'avion.

On connaît le document FR 2 937 952 A1 qui décrit une architecture d'avion équipé de moteurs dont les nacelles sont partiellement semi-enterrées latéralement en partie arrière le long du fuselage.

On connaît aussi le document US 2017/096232 A1 qui décrit une architecture d'avion équipé de moteurs dont les nacelles sont partiellement semi-enterrées dans le fuselage au-dessus en queue de l'avion.

On connaît aussi le document US 4 500 055 A qui décrit un aéronef dont les nacelles sont montées à l'arrière des ailes.

La présente invention a objet de proposer une architecture d'avion améliorée de traînée aérodynamique réduite et d'intégration aisée dans une architecture d'avion exista nte.

Ce but est atteint grâce à un avion selon les revendications 1 et 3. Selon la revendication 1, l'avion comprend un fuselage porteur d'une nacelle de l'avion déportée par rapport à une aile de l'avion, la nacelle formant un carénage d'entrée d'air d'un ensemble propulsif, la nacelle comportant une paroi inférieure et une paroi supérieure délimitant ensemble la hauteur de la nacelle, le bord d'entrée d'air de la paroi inférieure de la nacelle étant contigu d'un bord de fuite de l'aile.

Le positionnement aérodynamique du bord d'entrée d'air de la paroi inférieure de la nacelle et du bord de fuite de l'aile permet de limiter la traînée aérodynamique de l'aile tout en limitant fortement les distorsions au niveau de l'ensemble propulsif. La portance de l'aile se trouve alors améliorée.

On entend par « ensemble propulsif » un ensemble comprend au moins une nacelle et un moteur de type turboréacteur.

Par ailleurs, ce positionnement particulier permet d'assurer, par l'intermédiaire du différentiel de vitesse d'écoulement d'air entre l'extrados et l'intrados de l'aile, la portance aérodynamique de la nacelle compensant ainsi grandement la masse de l'ensemble propulsif.

On entend par « contigu » le fait que le bord d'entrée d'air de la paroi inférieure de la nacelle affleure le sillage de l'aile en offrant un espace pour l'écoulement de la couche limite de l'aile entre son bord de fuite et le bord d'entrée d'air de la paroi inférieure de la nacelle.

Plus particulièrement, le terme « contigu » peut avantageusement être quantifié par un intervalle vertical prédéterminé comme étant la différence de la distance verticale entre le bord d'entrée d'air de la paroi inférieure de la nacelle et le bord de fuite de l'aile divisé par la corde aérodynamique moyenne de l'aile. Cet intervalle vertical prédéterminé est avantageusement compris entre 0.05 et 0.2.

On entend par l'expression « vertical », une distance mesurée verticalement lorsqu'un avion possède un angle d'inclinaison nulle.

De la même façon, le terme « contigu » peut avantageusement être quantifié par un intervalle horizontal prédéterminé comme étant la différence de la distance horizontale entre le bord d'entrée d'air de la paroi inférieure de la nacelle et le bord de fuite de l'aile divisé par la corde aérodynamique moyenne de l'aile. Cet intervalle vertical prédéterminé est avantageusement compris entre 0.05 et 0.2.

On entend par l'expression « horizontal », une distance mesurée horizontalement lorsqu'un avion possède un angle d'inclinaison nul.

Selon une caractéristique de l'invention, la nacelle s'étend latéralement depuis le fuselage de l'avion selon une forme rectangulaire oblongue.

Selon une caractéristique de l'invention, l'ensemble propulsif comprend une pluralité de soufflantes.

Selon une autre caractéristique de l'invention, la nacelle comporte des cloisons de séparation des soufflantes.

Avantageusement, les cloisons sont orientées perpendiculairement par rapport à la paroi inférieure de la nacelle.

Selon une caractéristique de l'invention, le bord d'entrée d'air de la paroi inférieure est en aval de l'extrados de l'aile en étant parallèle à son bord de fuite.

On comprendra que la paroi inférieure est positionnée pour être balayée par le sillage de l'aile sans que toutefois la couche limite de l'extrados ne passe au-dessus de la paroi et ne pénètre dans l'ensemble propulsif de la nacelle.

Selon une particularité de l'invention, la nacelle est reliée mécaniquement à l'aile par au moins un pylône.

Selon un mode préféré de l'invention, l'ensemble propulsif est formé de turbines à gaz alimentées par un générateur à gaz, chaque turbine à gaz étant associée à une soufflante.

Selon une première variante de réalisation de ce mode préféré, le générateur à gaz est intégré dans la nacelle.

Avantageusement, le générateur à gaz est directement attelé à l'une des soufflantes de l'ensemble propulsif.

Selon une deuxième variante de réalisation de ce mode préféré, le générateur à gaz est porté par l'intrados de l'aile.

Selon une troisième variante de réalisation de ce mode préféré, le générateur à gaz est porté directement par le fuselage de l'avion.

Selon une particularité, lorsque le générateur à gaz est déporté de la nacelle, le pylône est configuré pour permettre le passage des conduits d'alimentation en gaz des turbines à gaz.

Selon une caractéristique de l'invention, des tuyères de sortie des turbines à gaz présentent une forme en Y pour le passage des conduits d'alimentation en gaz de chacune des turbines à gaz.

Selon une caractéristique de l'invention, une gaine de distribution est configurée pour envelopper chacun des conduits d'alimentation en gaz s'étendant le long de la nacelle.

Selon une particularité, la gaine de distribution est constitutive d'une ossature porteuse des turbines à gaz.

Non revendiqué, mais selon d'autres modes préférés de l'invention, l'ensemble propulsif comprend des moteurs alimentés électriquement ou hydrauliquement.

Lorsqu'une source d'alimentation de ces moteurs alimentés électriquement ou hydrauliquement est déportée de la nacelle, le pylône est configuré pour permettre le passage des conduits d'alimentation de ces moteurs.

La gaine de distribution telle que décrite précédemment peut venir envelopper chacun des conduits d'alimentation de ces moteurs.

Non revendiqué, mais selon une variante de réalisation, l'ensemble propulsif est formé de turbines électriques alimentées par un générateur électrique, chaque turbine électrique étant associée à une soufflante.

Non revendiqué, mais selon une autre variante de réalisation, l'ensemble propulsif est formé de turbines hydrauliques alimentées par un générateur hydraulique, chaque turbine hydraulique étant associée à une soufflante.

Non revendiqué, mais selon une autre variante de réalisation, l'ensemble propulsif est formé de turbines à transmission mécanique alimentées par un générateur à transmission mécanique, chaque turbine à transmission mécanique étant associée à une soufflante.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
La figure 1 représente une vue schématique d'un avion selon l'invention dont le fuselage porte des nacelles déportées des ailes, chacun nacelle portant un ensemble propulsif.
La figure 2 représente une vue en coupe schématique d'un agrandissement d'une section de la figure 1 illustrant le positionnement aérodynamique d'une nacelle par rapport à une l'aile de l'avion.
La figure 3 représente une variante de réalisation de l'invention où la nacelle est reliée par un pylône à l'aile de l'avion.
La figure 4 représente une variante de réalisation de l'invention où l'ensemble propulsif d'une nacelle est formé de turbines à gaz alimentées par un générateur à gaz intégré à la nacelle, chaque turbine à gaz étant associée à une soufflante.
La figure 5 représente une variante de réalisation de l'invention où le générateur à gaz est déporté de la nacelle et est fixé sur l'intrados de l'aile.
La figure 6 représente une vue schématique de dessus de l'avion où l'habillage de l'avion est ouvert pour mieux illustrer une ossature portante de la nacelle.
La figure 7 représente la variante de réalisation de la figure 4 où des conduits d'alimentation en gaz des turbines à gaz sont distribués par une gaine de distribution.
La figure 8 représente une vue schématique d'un mode de réalisation dans lequel le générateur à gaz est positionné derrière une soufflante en remplacement d'une turbine à gaz.
La figure 9 représente une vue arrière du mode de réalisation représenté à la figure 8.
La figure 10 représente la vue arrière de la figure 9 où la nacelle est équipé d'une gaine de distribution.
La figure 11 représente un autre mode de réalisation où la nacelle est reliée mécaniquement par un pylône et par un pylône additionnel.
La figure 12 représente une vue de dessus de la nacelle représentée à la figure 11.

Bien évidemment, l'invention ne se limite pas aux seules formes de réalisation de l'architecture décrites dans ces différents modes de réalisation à titre d'exemples sans toutefois sortir du contexte des revendications annexées.

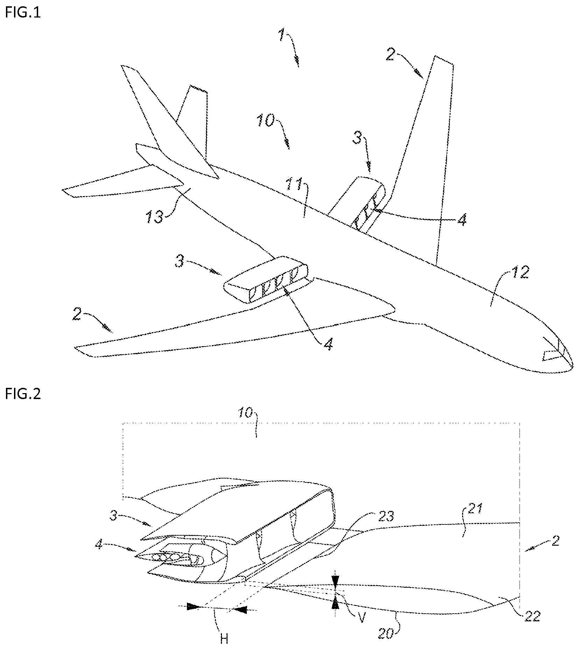

Aux figures 1 et 2, on a représenté un avion 1 selon l'invention dont le fuselage 10 est formé d'un caisson central 11 délimitant une partie avant 12 d'un cône de nez du fuselage 10 et une partie arrière 13 d'un cône de queue du fuselage 10.

Le fuselage 10 de l'avion 1 est porteur, d'une part, des ailes 2 de l'avion 1 et, d'autre part des nacelles 3 de l'avion 1. Les nacelles 3 sont par conséquent séparées des ailes 2 en étant déportées de celles-ci et entièrement portées par le fuselage 10 de l'avion 1.

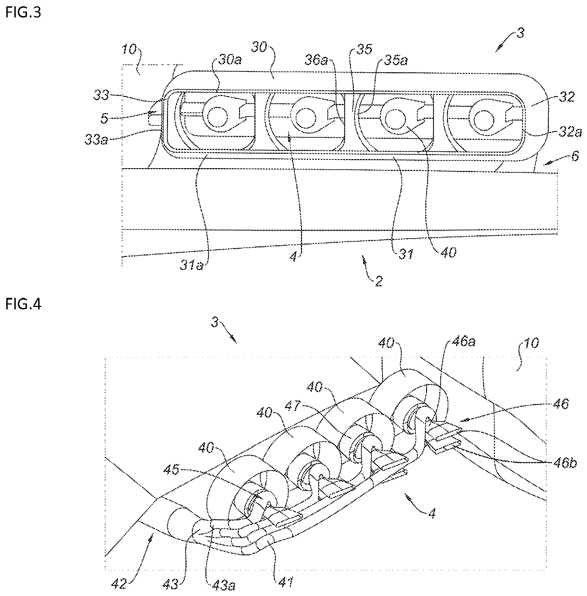

Tel que représenté à la figure 3, chaque nacelle 3 forme un carénage d'entrée d'air d'un ensemble propulsif. Plus particulièrement, chaque nacelle 3 comporte une paroi supérieure 30 et une paroi inférieure 31 délimitant la hauteur de la nacelle 3. Par ailleurs, chaque nacelle 3 comporte deux parois latérales 32, 33 délimitant entre elles la largeur de la nacelle 3. Les parois supérieure et inférieure 30, 31 avec les parois latérales 32, 33 constituent ensemble le carénage d'entrée d'air qui prend une forme rectangulaire oblongue.

Avantageusement, la mesure entre les parois latérales 32, 33 divisée par la mesure entres les parois supérieure et inférieure 30, 31 est comprise entre 2 et 12.

Les bords d'entrée d'air 30a, 31a, 32a, 33a des parois 30-33 forment ensemble une lèvre d'entrée d'air du carénage d'entrée d'air.

La forme oblongue des nacelles 3 s'entend en ce que les parois 30-33 de la nacelle 3 s'étendent vers l'arrière de l'avion 1 depuis la lèvre d'entrée d'air.

De façon connue en soi, chaque aile 2 comprend un intrados 20 et un extrados 21 délimitant un bord d'attaque 22 et un bord de fuite 23 de l'aile 2.

Selon un positionnement particulier, le bord d'entrée d'air 31a de la paroi inférieure 31 d'une nacelle 3 est contigu au bord de fuite 23 de l'aile 2 associée en étant en regard de l'extrados 21 de l'aile 2.

Outre la réduction de la traînée aérodynamique de l'aile 2 du fait d'une nacelle 3 déportée de cette dernière, ce positionnement particulier de la nacelle 3 par rapport à l'aile 2 permet de compenser sensiblement la masse de l'ensemble propulsif 4 par la portance de la nacelle 3 que permet ce positionnement aérodynamique.

En effet, en vol, un intervalle vertical V et horizontal H prédéterminé entre le bord de fuite 23 de l'aile 2 et la partie inférieure 31 de la nacelle 3, permet le passage du sillage de l'aile en dessous de la nacelle 3 créant ainsi une zone de ralentissement. Cet intervalle vertical V et horizontal H prédéterminé correspond respectivement à la différence de la distance verticale et horizontale entre le bord d'entrée d'air 31a de la paroi inférieure 31 de la nacelle 3 et le bord de fuite 23 de l'aile 2 divisée par la corde aérodynamique moyenne de l'aile 2. L'intervalle vertical V et horizontal H est avantageusement compris entre 0.02 et 0.2. Les intervalles vertical V et horizontal H peuvent avantageusement être de valeurs numériques distinctes l'une de l'autre selon la configuration de l'avion 2.

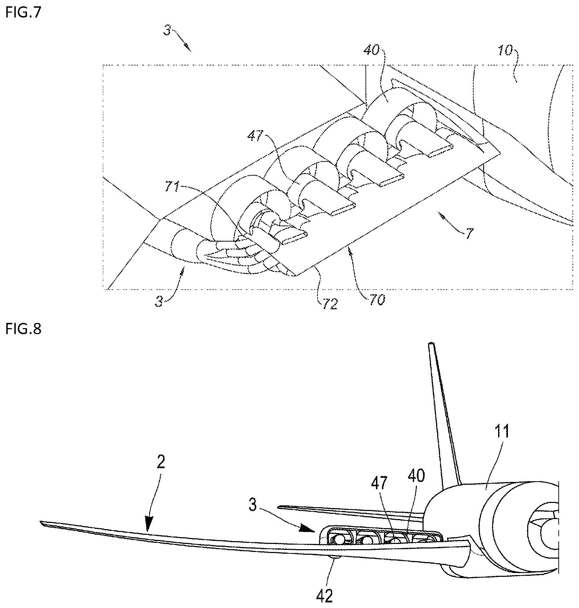

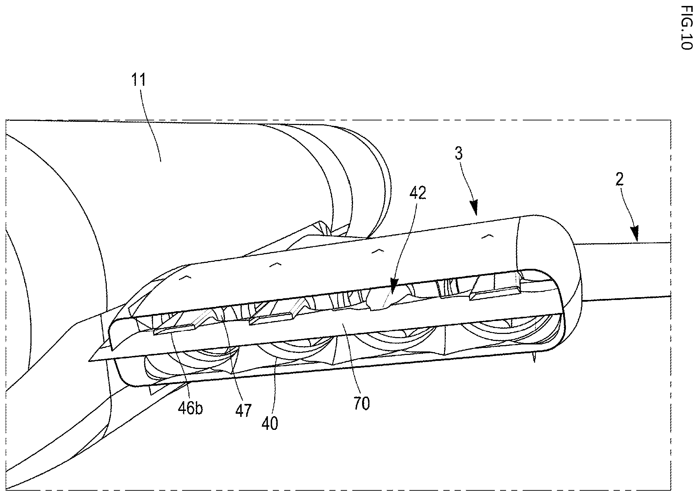

Il convient de noter que bien que le bord d'entrée d'air 31a de la paroi inférieure 31 de la nacelle 3 soit représenté comme étant parallèle au bord de fuite 23 de l'aile 2, l'intervalle vertical et/ou horizontal entre le bord d'entrée d'air 31a de la paroi inférieure 31 de la nacelle 3 et le bord de fuite 23 de l'aile 2 peut avantageusement varier le long de leur longueur tout en restant compris entre 0.02 et 0.2, tel que cela est représenté aux figures 8 ou 10.

La paroi supérieure 30 voit l'écoulement d'air hors du sillage plus rapidement que la paroi inférieure 31. Ceci engendre une dépression au niveau de la paroi supérieure 30 et une surpression de ralentissement au niveau de la paroi inférieure 31 d'où une portance de la nacelle 3. On pourra avantageusement choisir un profil supercritique pour la paroi inférieure 30 afin d'optimiser la portance en vol de croisière transsonique.

L'ensemble propulsif 4 comprend une pluralité de soufflantes 40 s'étendant de façon adjacente les unes aux autres dans la longueur de la nacelle 3.

Tel que représenté à la figure 3, un pylône 5 relie mécaniquement le carénage d'entrée d'air de forme rectangulaire oblongue au fuselage 10 de l'avion 1.

Un pylône additionnel 6 relie mécaniquement à la nacelle 3 à l'aile 2, ceci pour améliorer le maintien mécanique de la nacelle et minimiser les charges introduites à l'interface avec le fuselage.

Le pylône 5 peut, selon l'objectif recherché, être remplacé par au moins un second pylône analogue au pylône additionnel 6 reliant la paroi latérale 33 de la nacelle 3 à l'aile 2 au voisinage de son emplanture. Tout comme l'attache au fuselage ce second pylône permet une meilleure répartition de charge sur la nacelle 3 compte tenu de son envergure. Ces variantes avec ou sans second pylône permettent une meilleure répartition de la poussée avion sur l'aile 2 qui, dans l'état de l'art, n'est transmise à l'aile qu'en un seul point de son envergure.

Ce pylône additionnel 6 peut avantageusement être configuré pour permettre l'alimentation de l'ensemble propulsif 4. Pour cela, le pylône est avantageusement de section creuse en vue de permettre le passage de conduits d'alimentation en gaz 41 de l'ensemble propulsif 4.

Des cloisons de séparation 35 des soufflantes 40 sont prévues pour permettre la canalisation d'un flux d'air pour chaque soufflante 40. Ces cloisons 35 sont orientées perpendiculairement à la paroi inférieure 31. Chaque cloison 35 présente des faces convexes 35a, 35b s'étendant entre la paroi inférieure 31 et la paroi supérieure 30 de la nacelle 3 de sorte que chaque soufflante 40 est prise horizontalement entre les parois convexes 35a, 35b des cloisons de séparation 35 et verticalement entre la paroi supérieure 30 et la paroi inférieure 31 de la nacelle 3.

Selon un mode de réalisation illustré en figure 4, l'ensemble propulsif 4 est formé de turbines à gaz 47 alimentées par un générateur à gaz 42, chaque turbine à gaz étant associée à une soufflante.

Le conduit de sortie 43 du générateur à gaz 42 comporte une pluralité d'embranchements 43a auxquels sont reliées les conduits d'alimentation en gaz 41 des turbines à gaz 47. Les conduits d'alimentation en gaz 41 s'étendent dans la longueur de la nacelle 3 depuis le générateur à gaz 42 en vue d'alimenter chacune des turbines à gaz 47 formant, avec les soufflantes 40, l'ensemble propulsif 4 porté par la nacelle 3.

Les turbines à gaz 47 sont préférentiellement des turbines centripètes.

Les turbines à gaz 47 sont ici représentées par leurs tuyères d'entrée des gaz 45 et de sortie 46 dont les tuyères d'entrée 45 présentent une forme en U venant chercher l'entrée radiale des turbines à gaz 47 et dont les tuyères de sortie 46 présentent une forme Y de sorte à recevoir par une branche principale 46a les gaz d'échappement des turbines à gaz 47 et à évacuer ces gaz d'échappement par des branches secondaires 46b.

Ces tuyères de sortie 46b permettent le support et la distribution le long de la nacelle 3 des conduits d'alimentation en gaz 41 des turbines entre ces branches secondaires 46b des tuyères de sortie 46b.

Selon une première variante de réalisation illustrée à la figure 4, le générateur à gaz 42 est intégré à la nacelle 3. A titre non limitatif, le générateur à gaz 42 est disposé dans le carénage d'entrée d'air en étant porté par la paroi inférieure 31 de la nacelle 3.

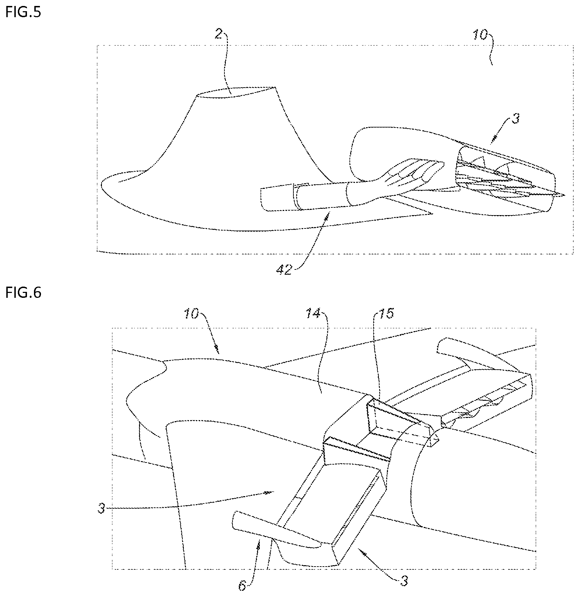

Selon une deuxième variante de réalisation illustrée à la figure 5, le générateur à gaz 42 est porté par l'intrados 20 de l'aile 2. Dans cette deuxième variante, on a retiré le pylône additionnel 6 afin de mieux illustrer l'acheminement des conduits d'alimentation en gaz 41 depuis le générateur à gaz 42 déporté vers les turbines à gaz 47 de l'ensemble propulsif 4 de la nacelle 3.

Selon une troisième variante de réalisation non illustrée, le générateur à gaz 42 peut être porté directement par le fuselage 10 de l'avion 1. Préférentiellement, le générateur à gaz 42 est porté par le ventre mou 14 du fuselage 10 de l'avion 1.

Dans tous les modes de réalisation comportant des générateurs à gaz 42 et des turbines à gaz 47 distribuées, tel que décrit ci-dessus, une conduite (non représentée) pourra relier avantageusement les deux générateurs à gaz 42. Cette conduite permet d'alimenter en cas de panne d'un des générateurs à gaz 42 le reste des turbines à gaz 47 de manière dégradée mais uniforme. Cette conduite pourra être ouverte en permanence ou bien uniquement en cas de panne de l'un des générateurs à gaz 47. La configuration d'intégration aérodynamique permet de minimiser les effets de la panne de propulsion sur un coté de l'avion lié en particulier à la panne d'un générateur à gaz 42. La conduite renforce la tenue à la panne de générateur à gaz 42 de configuration où l'avion serait extrêmement sensible à une perte de portance même minime sur l'un de ces côtés, par exemple dans le cas de gouverne de roulis sous-dimensionnées.

Tel que représenté à la figure 6, la nacelle 3 est reliée au fuselage 10 en aval d'une case de train d'atterrissage 15 de l'avion 1.

A la figure 7, on a représenté la nacelle 3 vue de l'arrière. Une gaine de distribution 70 est configurée pour envelopper les conduits d'alimentation en gaz 41. Cette gaine de distribution permet la tenue et la protection de ces conduits 41.

La gaine de distribution 70 est caractérisée par une enveloppe géométrique externe conformant un profil aérodynamique délimité entre un bord d'attaque 71 et un bord de fuite 72. Un tel profil aérodynamique contribue à l'amélioration de la portance de la nacelle 3.

Par ailleurs, tel que cela est représenté, la gaine de distribution 70 est solidaire du fuselage 10 de l'avion 1 de concert avec la nacelle 3 et forme une ossature 7 porteuse des turbines à gaz 47 de l'ensemble propulsif 4. Plus particulièrement, l'ossature 7 porte les stators des turbines à gaz 47 par l'intermédiaire de la gaine de distribution 70. Une telle ossature 7 porteuse des turbines à gaz 47 limite les phénomènes de vibrations au niveau des arbres des moteurs.

L'ossature 7 porteuse des turbines à gaz 47 peut, par exemple tout comme la nacelle 3, être solidaire du caisson de train d'atterrissage.

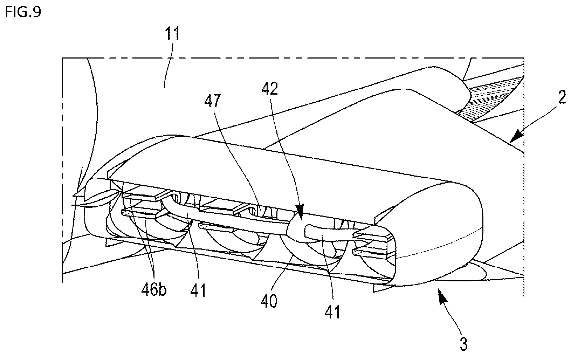

Les figures 8, 9 et 10 décrivent un mode d'intégration où au moins un générateur à gaz 42 est situé dans la nacelle 3 derrière l'une des soufflantes 40, c'est-à-dire en remplacement d'une des turbines à gaz 47, ici celle en troisième position en partant du fuselage de l'avion. Dans ce cas les conduits 41 partent de ce générateur à gaz 42 pour alimenter les trois autres turbines à gaz 47 en passant également par la gaine de distribution 70, représenté à la figure 10.

Il est à noter que cette configuration avec générateur à gaz 42 intégré est également applicable à des générateurs électriques, hydrauliques ou à une transmission mécanique, tel qu'un arbre flexible par exemple. Au besoin des modes de réalisation, le terme « générateur à gaz » pourra être remplacé par le terme « générateur électrique », « générateur hydraulique » ou encore « générateur à transmission mécanique ». Le positionnement des générateurs selon la variante choisie pourra avantageusement être identique à celui d'un générateur à gaz. De la même façon, au moins un pylône 5, 6 pourra être utilisé pour l'alimentation des turbines électriques, hydrauliques ou à transmission mécanique ou bien pour la tenue mécanique de la nacelle.

Selon l'objectif recherché et le taux de dilution des turbosoufflantes 40, 47, chacune formée d'une turbine à gaz 47 et d'une soufflante 40, ainsi attelé aux générateurs à gaz 42, une pluralité de générateurs à gaz 42 pourra être intégrée à la nacelle 3.

Ainsi, il peut être envisagé quatre turbosoufflantes 40, 47 indépendantes avantageusement de très fort taux de dilution mais de diamètre plus faible pourraient également être intégrés à l'avion de cette manière.

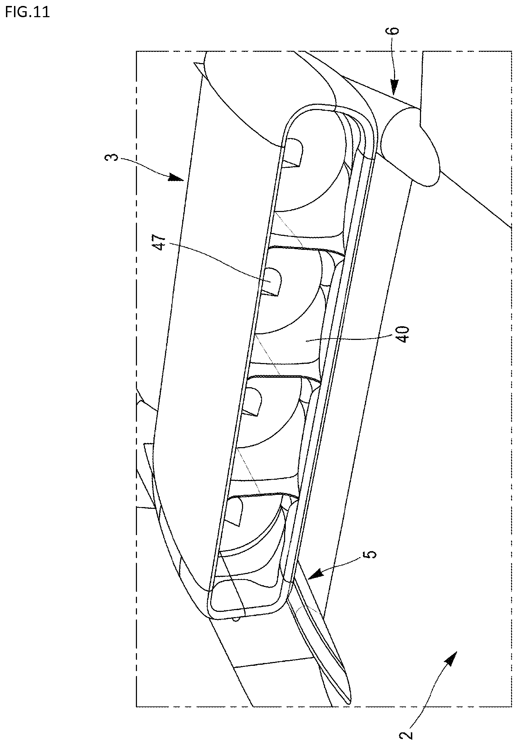

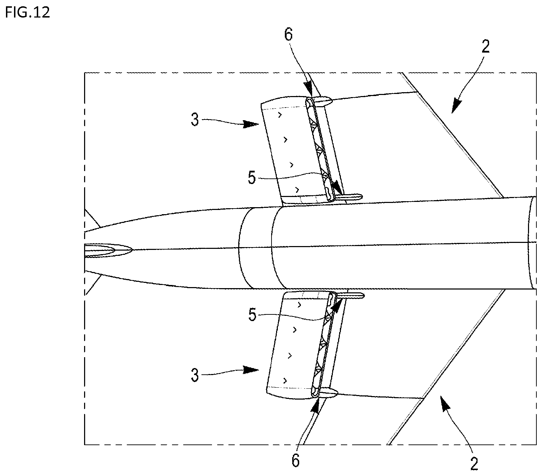

Les figures 11 et 12 représentent un autre mode de réalisation où la nacelle n'est plus reliée directement au fuselage mais est reliée à l'emplanture de l'aile 2 par un pylône additionnel 6 tel que décrit précédemment et complémentaire au pylône 5 tel que décrit précédemment. Cette réalisation permet l'intégration directement sur une aile lorsqu'un fuselage n'offre pas une interface structurale appropriée en aval immédiat du bord de fuite de l'aile.

Bien évidemment, l'invention ne se limite pas aux seules formes de réalisation de l'architecture décrites dans ces différents modes de réalisation à titre d'exemples sans toutefois sortir du contexte des revendications annexées.

## Revendications

1. Avion (1) comprenant un fuselage (10) porteur d'une nacelle (3) de l'avion (1) déportée par rapport à une aile (2) de l'avion (1), la nacelle (3) formant un carénage d'entrée d'air d'un ensemble propulsif (4), la nacelle (3) comportant une paroi inférieure (31) et une paroi supérieure (30) délimitant ensemble une hauteur de la nacelle (3), **caractérisé en ce qu'**un bord d'entrée d'air (31a) de la paroi inférieure (31) étant contigu d'un bord de fuite (23) de l'aile (2), dans lequel on entend par « contigu » le fait que le bord d'entrée d'air de la paroi inférieure de la nacelle affleure un sillage de l'aile en offrant un espace pour un écoulement d'une couche limite de l'aile entre son bord de fuite et le bord d'entrée d'air de la paroi inférieure de la nacelle.

2. Avion (1) selon la revendication précédente, **caractérisé en ce que** la nacelle (3) est reliée mécaniquement à l'aile (2) par au moins un pylône (6).

3. Avion (1) comprenant un fuselage (10), une nacelle (3) de l'avion (1) déportée par rapport à une aile (2) de l'avion (1), la nacelle (3) étant reliée à une emplanture de l'aile (2) par un pylône (6), la nacelle (3) formant un carénage d'entrée d'air d'un ensemble propulsif (4), la nacelle (3) comportant une paroi inférieure (31) et une paroi supérieure (30) délimitant ensemble une hauteur de la nacelle (3), **caractérisé en ce qu'**un bord d'entrée d'air (31a) de la paroi inférieure (31) étant contigu d'un bord de fuite (23) de l'aile (2), dans lequel on entend par « contigu » le fait que le bord d'entrée d'air de la paroi inférieure de la nacelle affleure un sillage de l'aile en offrant un espace pour un écoulement d'une couche limite de l'aile entre son bord de fuite et le bord d'entrée d'air de la paroi inférieure de la nacelle (3).

4. Avion (1) selon l'une quelconque des revendications précédentes, **caractérisé en ce que** la nacelle (3) s'étend latéralement depuis le fuselage (10) de l'avion (1) selon une forme rectangulaire oblongue.

5. Avion (1) selon l'une quelconque des revendications précédentes, **caractérisé en ce que** le bord d'entrée d'air (31a) de la paroi inférieure (31) est en aval d'un extrados (21) de l'aile (2) en étant parallèle à son bord de fuite.

6. Avion (1) selon l'une quelconque des revendications précédentes, **caractérisé en ce que** l'ensemble propulsif (4) comprend une pluralité de soufflantes (40).

7. Avion (1) selon la revendication précédente, **caractérisé en ce que** la nacelle (3) comporte des cloisons de séparation (35) des soufflantes (40).

8. Avion (1) selon l'une quelconque des revendications précédentes, **caractérisé en ce que** l'ensemble propulsif (4) est formé de turbines à gaz (47) alimentées par un générateur à gaz (42), chaque turbine à gaz (47) étant associée à une soufflante (40).

9. Avion (1) selon les revendications 2 ou 3, en combinaison avec la revendication 8, **caractérisé en ce que** le pylône (6) est configuré pour permettre le passage des conduits d'alimentation en gaz (41) des turbines à gaz (47).

10. Avion (1) selon la revendication précédente, **caractérisé en ce que** des tuyères de sortie 46 des turbines à gaz (47) présentent une forme en Y pour le passage des conduits d'alimentation en gaz (41) de chacune des turbines à gaz (47).

11. Avion (1) selon l'une quelconque des revendications 9 ou 10, **caractérisé en ce qu'**une gaine de distribution (70) est configurée pour envelopper chacun des conduits d'alimentation en gaz (41) s'étendant le long de la nacelle (3).

12. Avion (1) selon l'une quelconque des revendications 8 à 11, **caractérisé en ce que** le générateur à gaz (42) est intégré dans la nacelle.

13. Avion (1) selon l'une quelconque des revendications 8 à 12, **caractérisé en ce que** le générateur à gaz (42) est directement attelé à l'une des soufflantes (40) de l'ensemble propulsif (4).

14. Avion (1) selon l'une quelconque des revendications 8 à 11, **caractérisé en ce que** le générateur à gaz (42) est porté par l'intrados (20) de l'aile (2) ou **en ce que** le générateur à gaz (42) est porté directement par le fuselage (10) de l'avion (1).

15. Avion (1) selon l'une quelconque des revendications 1 à 7, **caractérisé en ce que** l'ensemble propulsif (4) est formé de turbines à transmission mécanique alimentées par un générateur à transmission mécanique, chaque turbine à transmission mécanique étant associée à une soufflante (40).

## Patentansprüche

1. Flugzeug (1), umfassend einen Rumpf (10), der ein Maschinenhaus (3) des Flugzeugs (1) trägt, das in Bezug auf einen Flügel (2) des Flugzeugs (1) versetzt ist, wobei das Maschinenhaus (3) eine Lufteinlassverkleidung einer Antriebseinheit (4) bildet, wobei das Maschinenhaus (3) eine untere Wand (31) und eine obere Wand (30) aufweist, die zusammen eine Höhe des Maschinenhauses (3) begrenzen, **dadurch gekennzeichnet, dass** eine Lufteinlasskante (31a) der unteren Wand (31) an eine Hinterkante (23) des Flügels (2) angrenzt, wobei unter "angrenzend" die Tatsache zu verstehen ist, dass die Lufteintrittskante der unteren Wand des Maschinenhauses bündig mit einer Spur des Flügels abschließt und einen Raum für eine Strömung einer Grenzschicht des Flügels zwischen seiner Hinterkante und der Lufteintrittskante der unteren Wand des Maschinenhauses bietet.

2. Flugzeug (1) nach dem vorhergehenden Anspruch, **dadurch gekennzeichnet, dass** das Maschinenhaus (3) durch mindestens einen Pylon (6) mechanisch mit dem Flügel (2) verbunden ist.

3. Flugzeug (1), umfassend einen Rumpf (10) und ein Maschinenhaus (3) des Flugzeugs (1), das in Bezug auf einen Flügel (2) des Flugzeugs (1) versetzt ist, wobei das Maschinenhaus (3) durch einen Pylon (6) mit einer Flügelwurzel des Flügels (2) verbunden ist, wobei das Maschinenhaus (3) eine Lufteinlassverkleidung einer Antriebseinheit (4) bildet, wobei das Maschinenhaus (3) eine untere Wand (31) und eine obere Wand (30) aufweist, die zusammen eine Höhe des Maschinenhauses (3) begrenzen, **dadurch gekennzeichnet, dass** eine Lufteinlasskante (31a) der unteren Wand (31) an eine Hinterkante (23) des Flügels (2) angrenzt, wobei unter "angrenzend" die Tatsache zu verstehen ist, dass die Lufteintrittskante der unteren Wand des Maschinenhauses bündig mit einer Spur des Flügels abschließt und einen Raum für eine Strömung einer Grenzschicht des Flügels zwischen seiner Hinterkante und der Lufteintrittskante der unteren Wand des Maschinenhauses (3) bietet.

4. Flugzeug (1) nach einem der vorhergehenden Ansprüche, **dadurch gekennzeichnet, dass** sich das Maschinenhaus (3) seitlich vom Rumpf (10) des Flugzeugs (1) in einer länglichen Rechteckform erstreckt.

5. Flugzeug (1) nach einem der vorhergehenden Ansprüche, **dadurch gekennzeichnet, dass** die Lufteintrittskante (31a) der unteren Wand (31) stromabwärts einer Oberseite (21) des Flügels (2) liegt und parallel zu dessen Hinterkante verläuft.

6. Flugzeug (1) nach einem der vorhergehenden Ansprüche, **dadurch gekennzeichnet, dass** die Antriebseinheit (4) eine Vielzahl von Gebläsen (40) umfasst.

7. Flugzeug (1) nach dem vorhergehenden Anspruch, **dadurch gekennzeichnet, dass** das Maschinenhaus (3) Trennwände (35) der Gebläse (40) aufweist.

8. Flugzeug (1) nach einem der vorhergehenden Ansprüche, **dadurch gekennzeichnet, dass** die Antriebseinheit (4) aus Gasturbinen (47) besteht, die von einem Gasgenerator (42) gespeist werden, wobei jede Gasturbine (47) mit einem Gebläse (40) verbunden ist.

9. Flugzeug (1) nach Anspruch 2 oder 3, in Kombination mit Anspruch 8, **dadurch gekennzeichnet, dass** der Pylon (6) so eingerichtet ist, dass er den Durchgang der Gasversorgungskanäle (41) der Gasturbinen (47) ermöglicht.

10. Flugzeug (1) nach dem vorhergehenden Anspruch, **dadurch gekennzeichnet, dass** die Auslassdüsen 46 der Gasturbinen (47) eine Y-Form für den Durchgang der Gasversorgungskanäle (41) jeder der Gasturbinen (47) besitzen.

11. Flugzeug (1) nach einem der Ansprüche 9 oder 10, **dadurch gekennzeichnet, dass** ein Verteilerkanal (70) so eingerichtet ist, dass er jeden der sich entlang des Maschinenhauses (3) erstreckenden Gasversorgungskanäle (41) umschließt.

12. Flugzeug (1) nach einem der Ansprüche 8 bis 11, **dadurch gekennzeichnet, dass** der Gasgenerator (42) in das Maschinenhaus integriert ist.

13. Flugzeug (1) nach einem der Ansprüche 8 bis 12, **dadurch gekennzeichnet, dass** der Gasgenerator (42) direkt an eines der Gebläse (40) der Antriebseinheit (4) gekoppelt ist.

14. Flugzeug (1) nach einem der Ansprüche 8 bis 11, **dadurch gekennzeichnet, dass** der Gasgenerator (42) von der Unterseite (20) des Flügels (2) getragen wird oder dass der Gasgenerator (42) direkt vom Rumpf (10) des Flugzeugs (1) getragen wird.

15. Flugzeug (1) nach einem der Ansprüche 1 bis 7, **dadurch gekennzeichnet, dass** die Antriebseinheit (4) aus mechanisch angetriebenen Turbinen besteht, die von einem mechanisch angetriebenen Generator gespeist werden, wobei jede mechanisch angetriebene Turbine mit einem Gebläse (40) verbunden ist.

## Claims

1. An aircraft (1) comprising a fuselage (10) carrying a nacelle (3) of the aircraft (1) offset relative to a wing (2) of the aircraft (1), the nacelle (3) forming an air inlet fairing of a propulsion assembly (4), the nacelle (3) including a lower wall (31) and an upper wall (30) delimiting together a height of the nacelle (3),
**characterized in that** an air inlet edge (31a) of the lower wall (31) being contiguous with a trailing edge (23) of the wing (2), wherein by "contiguous" it should be understood the fact that the air inlet edge of the lower wall of the nacelle is aligned with a wake of the wing by providing a space for a flow of a boundary layer of the wing between its trailing edge and the air inlet edge of the lower wall of the nacelle.

2. The aircraft (1) according to the preceding claim, **characterized in that** the nacelle (3) is mechanically connected to the wing (2) by at least one pylon (6).

3. The aircraft (1) comprising a fuselage (10), a nacelle (3) of the aircraft (1) offset relative to a wing (2) of the aircraft (1), the nacelle being connected to a root of the wing (2) by a pylon (6), the nacelle (3) forming an air inlet fairing of a propulsion assembly (4), the nacelle (3) including a lower wall (31) and an upper wall (30) delimiting together a height of the nacelle (3),
**characterized in that** an air inlet edge (31a) of the lower wall (31) being contiguous with a trailing edge (23) of the wing (2), wherein by "contiguous" it should be understood the fact that the air inlet edge of the lower wall of the nacelle is aligned with a wake of the wing by providing a space for a flow of a boundary layer of the wing between its trailing edge and the air inlet edge of the lower wall of the nacelle (3).

4. The aircraft (1) according to any one of the preceding claims, **characterized in that** the nacelle (3) extends laterally from the fuselage (10) of the aircraft (1) in an oblong rectangular shape.

5. The aircraft (1) according to any one of the preceding claims, **characterized in that** the air inlet edge (31a) of the lower wall (31) is downstream of an upper surface (21) of the wing (2) while being parallel to its trailing edge.

6. The aircraft (1) according to any one of the preceding claims, **characterized in that** the propulsion assembly (4) comprises a plurality of fans (40).

7. The aircraft (1) according to the preceding claim, **characterized in that** the nacelle (3) includes partitions (35) of the fans (40).

8. The aircraft (1) according to any one of the preceding claims, **characterized in that** the propulsion assembly (4) is formed of gas turbines (47) powered by a gas generator (42), each gas turbine (47) being associated with a fan (40).

9. The aircraft (1) according to claims 2 or 3, in combination with claim 8, **characterized in that** the pylon (6) is configured to enable the passage of the gas supply conduits (41) of the gas turbines (47).

10. The aircraft (1) according to the preceding claim, **characterized in that** outlet nozzles 46 of the gas turbines (47) have a Y shape for the passage of the gas supply conduits (41) of each of the gas turbines (47).

11. The aircraft (1) according to any one of claims 9 or 10, **characterized in that** a distribution duct (70) is configured to envelop each of the gas supply conduits (41) extending along the nacelle (3).

12. The aircraft (1) according to any one of claims 8 to 11, **characterized in that** the gas generator (42) is integrated into the nacelle.

13. The aircraft (1) according to any one of claims 8 to 12, **characterized in that** the gas generator (42) is directly coupled to one of the fans (40) of the propulsion assembly (4).

14. The aircraft (1) according to any one of claims 8 to 11, **characterized in that** the gas generator (42) is carried by the lower surface (20) of the wing (2) or **in that** the gas generator (42) is carried directly by the fuselage (10) of the aircraft (1).

15. The aircraft (1) according to any one of claims 1 to 7, **characterized in that** the propulsion assembly (4) is formed of mechanical transmission turbines powered by a mechanical transmission generator, each mechanical transmission turbine being associated with a fan (40).
